# EUROPEAN PATENT SPECIFICATION

(11) **EP 4 111 917 B1**
(45) Date of publication and mention of the grant of the patent: **21.01.2026**
(21) Application number: 21382583.9
(22) Date of filing: 01.07.2021
(51) Int. Cl.: A47J 31/42, A47J 31/58, A47J 42/08, A47J 42/18, A47J 42/06

(54) **AUTOMATIC COFFEE MAKER COMPRISING A MULTIFUNCTIONAL CONTROL**
KAFFEEMASCHINE MIT MULTIFUNKTIONSSTEUERUNG
MACHINE À CAFÉ AUTOMATIQUE COMPRENANT UNE COMMANDE MULTIFONCTIONNELLE

(43) Date of publication of application: 04.01.2023
(73) Proprietor: B & B Trends S.L., 08130 Santa Perpètua de Mogoda, Barcelona (ES)
(72) Inventor: ASARTA MARTIN, Eneko, 01010 VITORIA-GASTEIZ (Álava) (ES); ELORZA LAUZURICA, Iñaki, 01010 VITORIA-GASTEIZ (Álava) (ES); LARRAÑAGA CANO, Miguel, Ángel, 01010 VITORIA-GASTEIZ (Álava) (ES)
(74) Representative: Herrero & Asociados, S.L.

(56) References cited:
- CN-A- 105 581 655
- GB-A- 2 435 609
- US-B1- 6 827 002

## Description

### OBJECT OF THE INVENTION

The present invention belongs to the field of household appliances, and more specifically coffee machines and/or coffee grinders.

The object of the present invention is an automatic coffee maker as defined in claim 1, said automatic coffee maker comprising a multifunction control which allows not only to adjust and select the size or fineness of the grind, but also performs the function of barrier and protection, preventing the introduction of the user's fingers into the grinding wheels of the grinder, thus integrating two functions in a single piece.

### BACKGROUND OF THE INVENTION

At present, automatic coffee machines are widely known, which generally have a tank for the storage of ground coffee (powdered) and another tank for the storage of coffee beans (unground coffee beans).

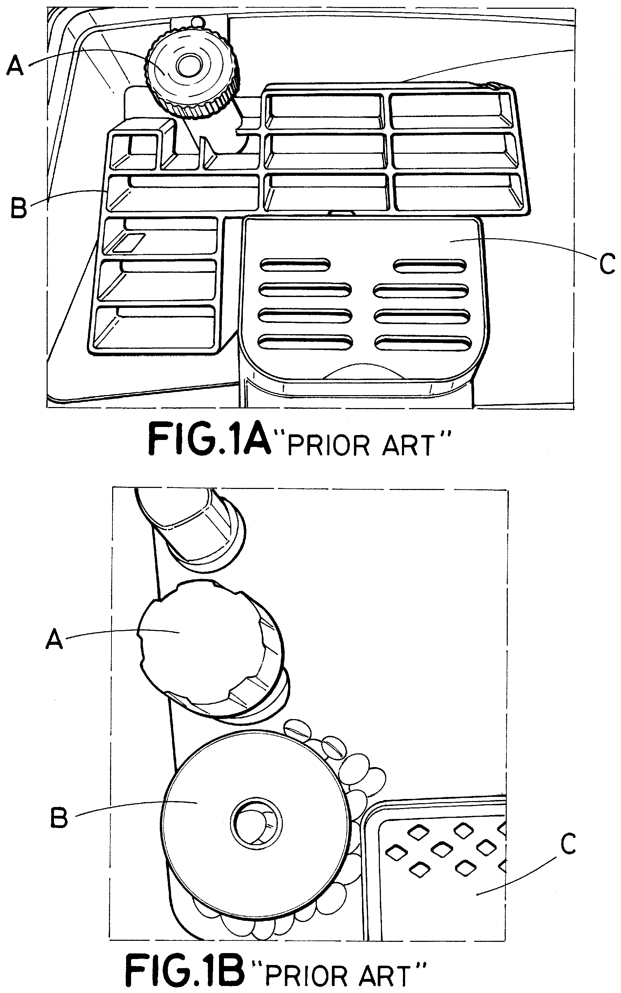

In particular, there are models of automatic coffee machines that allow the user to vary and adjust the size of the coffee bean grind, from a fine bean to a coarse bean, so that it is possible to obtain different types of coffee, depending on the desired grinding time and/or bean size. For this purpose, current coffee machines have a rotary knob (A) for the selection of the grind size, see Figures 1A and 1B.

Indeed, the common complement of this type of automatic coffee makers is the coffee grinder, located under the coffee bean tank, and with which the beans are ground to a specific size for each type of coffee. In this sense, more and more consumers prefer to grind the coffee, and not buy it already ground, since it is known that the best results are obtained by grinding the bean just before using it for the preparation of coffee, so that all its aroma and flavor is preserved.

In addition, for safety reasons, current coffee makers also have an additional part (B), independent of the rotary knob (A), which acts as a protection, so that the user cannot access the grinder grindstones where the coffee beans are located, thus avoiding possible accidents or trapping of the user's fingers.

Figures 1A and 1B show a couple of examples of coffee makers belonging to the prior art, where the two parts (A, B) indicated above can be clearly seen, that is, on the one hand, the rotary knob (A) for the adjustment of the grind size, and on the other hand the protective part (B) against the introduction of the fingers into the grinder. In addition, these figures also show the other tank (C) for the ground coffee.

Patent US6827002B1 relates to an automatic coffee maker having a grinding device. On the other hand, British patent application GB2435609A relates to a handheld coffee making apparatus designed for making individual measures of coffee beverage directly from coffee beans where coffee is ground directly into the infusion means for immersion into a cup or mug of hot water.

Therefore, the technical problem that arises here is to obtain an automatic coffee maker that integrates in a single piece both functionalities (adjustment of grinding, and protection against trapping of the user's fingers in the grinder), in order to achieve a structurally simpler solution, with a smaller number of necessary parts, thus reducing the possible breakdowns and failures, without affecting the efficiency of the process of obtaining coffee or the quality of the coffee finally obtained.

### DESCRIPTION OF THE INVENTION

The present invention solves the above-mentioned technical problem by providing an automatic coffee maker as defined in claim 1, said automatic coffee maker comprising a multifunctional control which integrates two functions in a single piece, allowing on the one hand to adjust and select the size or fineness of the grind, while at the same time acting as a barrier and protection against possible accidents, preventing the introduction of the user's fingers into the grinder wheels.

In this way, it is possible to integrate two functionalities (adjustment of the grinding size and protection) by means of a single piece formed by the cylindrical body, adjusting means and protection means, without the need to require in the coffee maker an exclusive zone for the regulation and selection of the bean size to be ground, and another zone for the protection and barrier to prevent access to the grinder, thus constituting a simpler, more cost-effective and easy-to-manufacture solution.

Preferably, the adjusting means comprise a rotating and adjustable wheel, for the selection of the desired grinding fineness. This rotating wheel allows the user to graduate and select the size of the coffee beans to be ground, from a fine bean to a coarse bean, for the preparation of different types of coffee, more or less intense, etc.

According to the present invention, the protection means comprise a ring protruding outwardly with respect to the cylindrical body, wherein said ring is arranged in a slightly raised position with respect to the base of the coffee bean housing tank, such that only the passage of the coffee beans towards the grinding unit is possible. As a consequence, the space existing between the base of the tank and said ring is such that it is large enough to allow the passage of the largest coffee bean, while at the same time being small enough to prevent the insertion of a finger of a user.

In accordance with another object of the invention, a coffee maker including the above-described multifunctional control is described.

The advantages obtained by the automatic coffee maker of the present invention are listed below:
- Integration of two functions in a single part, allowing on the one hand to adjust and select the size or fineness of the grind, while at the same time acting as a barrier and protection against possible accidents due to entrapment.
- Structural simplicity. Reduction of the number of components and parts required, so that problems due to failures, breakdowns and/or replacement of parts are minimized.
- Fast and simple manufacturing, resulting in a robust and cost-effective product.
- For all of the above, a more environmentally friendly solution is obtained, which contributes to the reduction of CO2 emissions.

### BRIEF DESCRIPTION OF THE DRAWINGS

For a better understanding the above explanation and for the sole purpose of providing an example, some non-limiting drawings are included that schematically depict a practical embodiment.
Figures 1A-1B.- Show a pair of examples belonging to the prior art, where the two independent zones existing in current coffee machines can be clearly appreciated, with one part destined to the selection of the grind size, and another part destined to the protection against possible entrapment.
Figure 2.- Shows a perspective view of the multifunctional control which also acts as a protection barrier against entrapment.
Figure 3.- Shows a sectional view of the multifunctional control.

### PREFERRED EMBODIMENT OF THE INVENTION

An example of a preferred embodiment is described below, mentioning the figures above, without limiting or reducing the scope of protection of the present invention, which is defined by the appended claims.

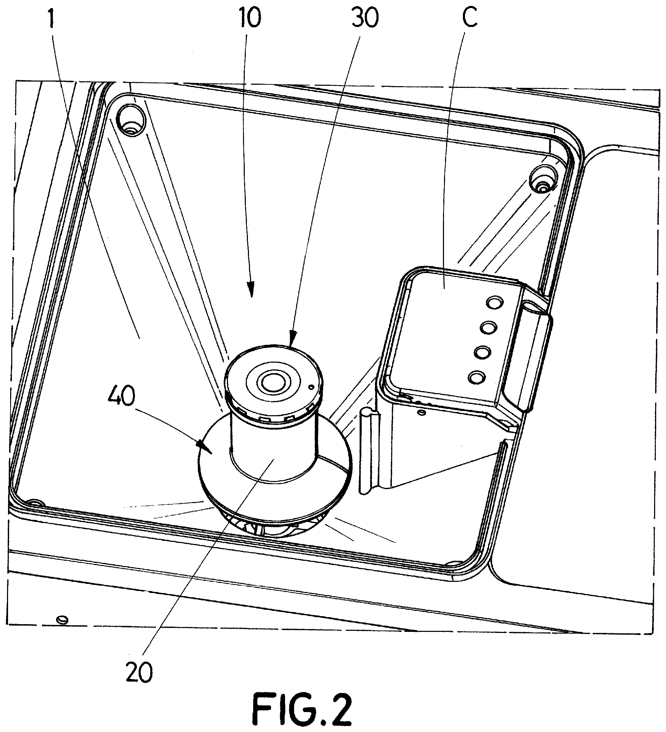

Figure 2 shows the multifunctional control (10) of the invention, which comprises:
- a cylindrical body (20) which projects vertically upwards, and which is located inside the area corresponding to the coffee bean housing tank (1);
- adjusting means (30) for the selection of the coffee bean grinding size, located at the upper end of the cylindrical body (20); and
- protection means (40), arranged at the lower end of the cylindrical body (20), such that said protection means (40) do not come into contact with the surface of the coffee bean holding tank (1).

In this way, the two functionalities, bean size selection and protection against entrapment, are integrated in a single solution, all within the coffee bean housing tank (1), without having to have two distinct and separate zones within the coffee maker with their corresponding component parts.

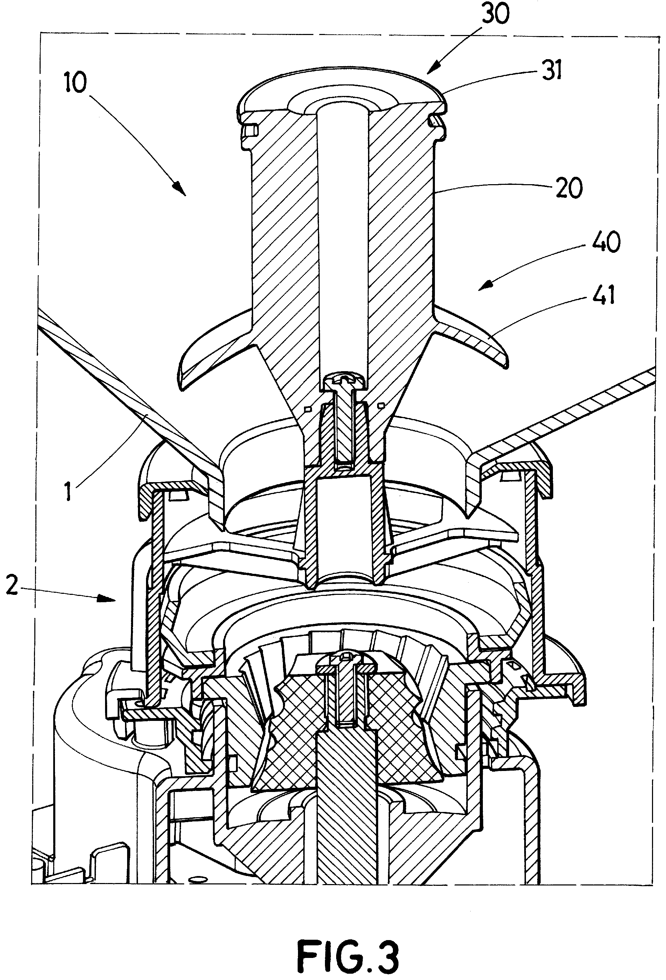

More specifically, according to the embodiment shown in figure 3, the adjusting means (30) of the coffee bean grinding size comprise a rotating and adjustable wheel (31), for the selection of the desired grinding fineness. This makes it possible to obtain a more or less intense coffee depending on the size selected, allowing a greater or lesser number of coffee beans to pass into the grinding unit (2).

For their part, the protection means (40) comprise a ring (41), shown more clearly in figure 3, protruding outwardly with respect to the cylindrical body (20), where said ring (41) is arranged in a slightly elevated position with respect to the base of the tank (1) for housing coffee beans, such that only the passage of the coffee beans towards the grinding unit (2) is possible.

Figure 3 shows that the ring (41) has a negative slope as it moves away from its center. This is not a trivial or random feature, but pursues a well identified double objective:
- facilitate the collection of the coffee beans lodged in the tank (1), for their descent towards the grinding unit (2), ensuring that no coffee bean remains stagnant between the ring (41) and the cylindrical body (20), thus favoring the natural fall of the bean by its own weight;
- avoid possible trapping or insertion of the user's fingers, so that there is only a small free space for the passage of the coffee beans between the concave curvature of the tank (1) and the convex curvature of the ring (41).

Furthermore, as shown in the sectional view of figure 3, it is provided that the cylindrical body (20), the adjusting means (30) and the protection means (40) can be made of the same material, constituting a single piece. This makes it possible to maximize even more if possible the advantages indicated above, in particular those related to structural simplicity and quick and simple manufacture, reducing costs to a minimum.

## Claims

1. Automatic coffee maker comprising at least one tank (1) for housing coffee beans, a grinding unit (2) located inside said tank (1) and a multifunctional control (10), the multifunctional control (10) comprising:
- a cylindrical body (20) projecting vertically upwards, and located inside the area corresponding to the coffee bean housing tank (1);
- adjusting means (30) for the selection of the coffee bean grinding size, located at the upper end of the cylindrical body (20);
- protection means (40), arranged at the lower end of the cylindrical body (20), such that said protection means (40) do not come into contact with the surface of the coffee bean housing tank (1);
said automatic coffee maker being **characterised in that** the protection means (40) comprise a ring (41) protruding outwards with respect to the cylindrical body (20), wherein said ring (41) is arranged in a slightly raised position with respect to the base of the tank (1) for housing coffee beans, such that only the passage of the coffee beans towards the grinding unit (2) is possible.

2. Automatic coffee maker, according to claim 1, **characterized in that** the adjusting means (30) of the coffee bean grinding size comprise a rotating and adjustable wheel (31), for the selection of the desired grinding fineness.

3. Automatic coffee maker, according to claim 1, **characterized in that** the ring (41) has a negative slope as it moves away from its center.

4. Automatic coffee maker, according to claim 1, **characterized in that** the cylindrical body (20), the adjusting means (30) and the protection means (40) are made of the same material, constituting a single piece.

## Patentansprüche

1. - Automatische Kaffeemaschine, umfassend mindestens einen Behälter (1) zur Aufnahme von Kaffeebohnen, eine innerhalb des Behälters (1) angeordnete Mahleinheit (2) und eine Multifunktionssteuerung (10), wobei die Multifunktionssteuerung (10) umfasst:
- einen zylindrischen Körper (20), der vertikal nach oben vorsteht und innerhalb des Bereichs angeordnet ist, der dem Kaffeebohnen-Aufnahmebehälter (1) entspricht;
- eine Einstellvorrichtung (30) zur Auswahl der Kaffeebohnen-Mahlgröße, welche am oberen Ende des zylindrischen Körpers (20) angeordnet ist;
- eine Schutzvorrichtung (40), die am unteren Ende des zylindrischen Körpers (20) angeordnet ist, sodass die Schutzvorrichtung (40) nicht mit der Oberfläche des Kaffeebohnen-Aufnahmebehälters (1) in Kontakt kommt;
wobei die automatische Kaffeemaschine **dadurch gekennzeichnet ist, dass** die Schutzeinrichtung (40) einen Ring (41) umfasst, der in Bezug auf den zylindrischen Körper (20) nach außen vorsteht, wobei der Ring (41) in einer leicht erhöhten Position in Bezug auf den Boden des Behälters (1) zur Aufnahme von Kaffeebohnen angeordnet ist, so dass nur der Durchlass der Kaffeebohnen zur Mahlvorrichtung (2) möglich ist.

2. - Automatische Kaffeemaschine gemäß Anspruch 1, **dadurch gekennzeichnet, dass** die Einstellvorrichtung (30) für die Kaffeebohnen-Mahlgröße ein drehbares und einstellbares Rad (31) zur Auswahl der gewünschten Mahlfeinheit umfasst.

3. - Automatische Kaffeemaschine gemäß Anspruch 1, **dadurch gekennzeichnet, dass** der Ring (41) mit zunehmender Entfernung von seiner Mitte eine negative Steigung aufweist.

4. - Automatische Kaffeemaschine gemäß Anspruch 1, **dadurch gekennzeichnet, dass** der zylindrische Körper (20), die Einstellvorrichtung (30) und die Schutzvorrichtung (40) aus dem gleichen Material bestehen und ein einziges Teil bilden.

## Revendications

1. Cafetière automatique comprenant au moins un réservoir (1) destiné à contenir des grains de café, une unité de broyage (2) située à l'intérieur dudit réservoir (1) et une commande multifonctionnelle (10), la commande multifonctionnelle (10) comprenant :
- un corps cylindrique (20) faisant saillie verticalement vers le haut et situé à l'intérieur de la zone correspondant au réservoir (1) destiné à contenir les grains de café ;
- des moyens de réglage (30) pour la sélection de la taille de mouture des grains de café, situés à l'extrémité supérieure du corps cylindrique (20) ;
- des moyens de protection (40), disposés à l'extrémité inférieure du corps cylindrique (20), de telle sorte que lesdits moyens de protection (40) n'entrent pas en contact avec la surface du réservoir (1) de grains de café ;
ladite cafetière automatique étant **caractérisée en ce que** les moyens de protection (40) comprennent une bague (41) faisant saillie vers l'extérieur par rapport au corps cylindrique (20), ladite bague (41) étant disposée dans une position légèrement surélevée par rapport à la base du réservoir (1) destiné à contenir les grains de café, de telle sorte que seul le passage des grains de café vers l'unité de broyage (2) est possible.

2. Cafetière automatique, selon la revendication 1, **caractérisée en ce que** le moyen de réglage (30) de la taille de mouture des grains de café comprend une molette rotative et réglable (31), permettant de sélectionner la finesse de mouture souhaitée.

3. Cafetière automatique, selon la revendication 1, **caractérisée en ce que** l'anneau (41) présente une pente négative à mesure qu'il s'éloigne de son centre.

4. Cafetière automatique, selon la revendication 1, **caractérisée en ce que** le corps cylindrique (20), le moyen de réglage (30) et le moyen de protection (40) sont réalisés dans le même matériau, constituant une seule pièce.
